# EUROPÄISCHE PATENTANMELDUNG

(11) **EP 1 248 339 A2**
(43) Veröffentlichungstag der Anmeldung: **09.10.2002**
(21) Anmeldenummer: 02007592.5
(22) Anmeldetag: 04.04.2002
(51) Int. Cl.: H02B 11/133

(54) **Betätigungsvorrichtung für einen Schalter**

(30) Priorität: 04.04.2001 DE 10116895
(71) Anmelder: Felten & Guilleaume AG, 51063 Köln (DE)
(72) Erfinder: Bünten, Peter, 47877 Willich (DE); Heister, Heinz, 47829 Krefeld (DE)

(57) **Zusammenfassung**

Die Erfindung betrifft eine Sperre für eine Betätigungsvorrichtung eines Trennschalters in einer mit einem Leistungsschalter schaltbaren Mittelspannungsschaltanlage. Die Erfindung besteht darin, dass die Betätigungsvorrichtung durch in eine Betätigungswelle (10) einführbare Handkurbel betätigt wird, wobei der Eintritt in die Betätigungswelle (10) verschließbar ist. Hierzu sind eine oder zwei gegensinnig bewegbare Klappen (5, 7) zum Versperren des Einführens und ein manuell betätigbarer Verriegelungsschieber (20) vorhanden. Der Verriegelungsschieber (20) korrespondiert mit der Schaltstellung des Leistungsschalters und ist über eine Vier-Hebelmechanik mit den Klappen (5, 7) derart verbunden, dass in der AUS-Stellung des Leistungsschalters die Einführöffnung (11) freigegeben wird und in der EIN-Stellung des Leistungsschalters die Einführöffnung durch eine der Klappen (5, 7) gesperrt bleibt.

## Beschreibung

Die Erfindung betrifft eine Sperre für eine Betätigungsvorrichtung eines Schalters, insbesondere eines Trennschalters in einer mit einem Leistungsschalter schaltbaren Mittelspannungsschaltanlage.

Die Betätigung von Schaltern kann aus Sicherheitsgründen in elektrischen Schaltanlagen nicht beliebig erfolgen.

So ist in der DE 41 31 328 A1 eine Verriegelung für eine Betätigungswelle dargestellt, die nach Öffnen einer Betätigungsöffnung wirksam wird und wo die Verriegelung auch mit dem Erdungsschalter korrespondiert, der aus der EIN-Stellung nur bei geschlossener Betätigungsöffnung in die AUS-Stellung bewegbar ist.

Einen Schutz gegen fehlerhafte Bedienung zeigt die DE 43 13 647 A1 auf, bei der die Betätigung eines Hauptschalters durch mindestens eine mit der Antriebswelle gekuppelte Riegelstange sperrbar ist. Die Schutzvorrichtung zeigt weiterhin eine Ausgestaltung, bei sie mit der Stellung des Geräteträgers gekoppelt ist und die Freigabe einer Durchtrittsöffnung nur bei eingeschobenem Geräteträger erfolgt. Die Verknüpfung mehrerer Schutzfunktionen führt zwangsläufig zu einem komplexen mechanischen Aufbau.

Ein anderes Schaltgerät (DE 44 20 580 C1) weist eine Einrichtung zum Ein- und Ausfahren relativ zu einem Einschubrahmen auf. Der Zugang eines Werkzeugs zu der Einrichtung zum Ein- und Ausfahren ist durch ein Verschlussorgan sperrbar, das in Abhängigkeit von einer zwei Sperrflächen aufweisenden Sperrstange betätigbar ist. Über eine Hebelmechanik ist eine der Sperrflächen durch einen AUS-Betätiger und die andere Fläche durch einen von der Schaltwelle anhängigen EIN-Sperrhebel überdeckbar.

In der DE 19647747 C1 wird eine Sperre für eine Betätigungseinrichtung eines Trennschalters in einer mit einem Leistungsschalter schaltbaren Mittelspannungsanlage gezeigt, wobei die Betätigungsvorrichtung durch eine Öffnung einer Betätigungswelle einführbare Handkurbel betätigt wird. Dabei wird das Einführen der Kurbel in die Einführöffnung mit einer bewegbaren Klappe zum Versperren der Einführöffnung verhindert, wobei ein manuell zu betätigender Verriegelungsschieber vorhanden ist. Dabei entspricht die Stellung des Verrieglungsschiebers der Stellung des Leistungsschalters, bei dessen EIN-Stellung die Einführöffnung gesperrt bleibt

In einem Leistungsschalterfeld mit einem Leistungsschalter wird seitens der Betreiber aus Sicherheitsaspekten ein Trennschalter gefordert. Der Trennschalter darf jedoch immer nur dann geschaltet werden, wenn der Leistungsschalter ausgeschaltet ist, da der Trennschalter über kein eigenes Löschsystem verfügt.

Es ist die Aufgabe der Erfindung, eine einfach wirksame Sperre für eine Dreh-Betätigungsvorrichtung eines Schalters anzugeben, bei dem Stellungen des Schalters Winkellagen einer Betätigungswelle entsprechen.

Die Lösung findet sich in den Merkmalen des Hauptanspruchs. Weiterführende Ausgestaltungen sind in den Unteransprüchen formuliert.

Der Kern der Erfindung besteht darin, dass die Betätigungsvorrichtung durch in eine Einführöffnung einer Betätigungswelle einführbare Handkurbel betätigt wird, wobei die Öffnung in der Betätigungswelle verschließbar ist, so dass das Einführen der Handkurbel verhindert wird und die Betätigung unmöglich ist. Hierzu sind eine Klappe oder vorzugsweise zwei gegensinnig bewegbare Klappen zum Versperren der Einführöffnung und ein manuell betätigbarer Verriegelungsschieber vorhanden. Der Verriegelungsschieber korrespondiert mit der Schaltstellung des Schalters und ist über eine Hebelmechanik mit der oder den Klappen derart verbunden, dass in der AUS-Stellung des Schalters die Einführöffnung freigegeben wird und in der EIN-Stellung des Schalters die Einführöffnung, bzw. das Erreichen der Wirkverbindungslage durch mindestens eine Klappe gesperrt bleibt.

Die Sperre soll insbesondere für einen Trennschalter in einer mit einem Leistungsschalter schaltbaren Mittelspannungsschaltanlage eingesetzt werden. Die Sperre ist für eine Betätigungsvorrichtung des Trennschalters vorzusehen, so dass der Trennschalter gesperrt bleibt, wenn der Leistungsschalter in EIN-Stellung steht.

Mit der Erfindung können folgende Anforderungen an die Verriegelung befriedigt werden:
1. Der Leistungsschalter muss geschaltet werden können, wenn der Trennschalter gesperrt ist. Der Trennschalter kann sich sowohl in EIN-Stellung als auch in AUS-Stellung befindet.
2. Der Trennschalter darf nur dann geschaltet werden können, wenn der Leistungsschalter ausgeschaltet ist.

Mit der Erfindung kann eine preisgünstige, wenig störanfällige Verriegelung geliefert werden. Die Verriegelung ist von einer elektrischen Hilfsspannung unabhängig. Sie wirkt kraft-unabhängig und sie kann nur durch einen Betätigungsstift betätigt werden. Die beiden Stellungen des Trennschalters, insbesondere in der EIN-Stellung sind sicher sperrbar.

Weitere Ausführungsformen der Erfindung werden dargestellt, wobei diese Ausführungsformen einzeln oder in Kombination miteinander die Sperre für die Betätigungsvorrichtung vorteilhaft ergänzen oder erweitern.

Zwei gegensinnig bewegbare Klappen zum Verhindern des Einführens der Handkurbel können vorhanden sein. Der Verriegelungsschieber ist über eine Hebelmechanik mit beiden Klappen verbunden. Die Klappen können eng benachbart - quasi in einer Ebene - angeordnet oder auch in verschiedener Tiefe in bezug auf die Betätigungswelle vorhanden sein.

Dabei kann mindestens eine bewegbare Klappe zum Versperren der Einführöffnung vor der Stirnseite der Betätigungswelle angeordnet sein.

In der Betätigungswelle kann senkrecht zu Wellenachse ein Schlitz ausgebildet sein. Mindestens eine bewegbare Klappe taucht in den Schlitz ein und verhindert das Einführen der Handkurbel. Bei dieser Ausführungsform bewegen sich eine oder beide Klappen sperrend nicht vor der Stirnseite, sondern in einer bestimmten Tiefe der Betätigungswelle.

Die Hebelmechanik kann eine Vierhebel-Mechanik sein. Eine solche wird in der Figurenbeschreibung ausführlich dargestellt.

Der Verriegelungsschieber ist über einen an der Frontseite des Schaltergehäuses zugänglichen Betätigungsstift verschiebbar.

Vorzugsweise soll die Betätigungssperre bei einem Trennschalter in einer mit einem Leistungsschalter schaltbaren Mittelspannungsschaltanlage eingesetzt werden, wobei EIN- und AUS-Stellungen des Trennschalters Winkellagen der Betätigungswelle entsprechen.

Die Erfindung wird in den Zeichnungen dargestellt. Es zeigen im Einzelnen die Betätigungsvorrichtung:
Fig. 1 bei gesperrter Einführöffnung für die Handkurbel und ausgeschaltetem Trennschalter,
Fig. 2 bei zugänglicher Wirkverbindungslage und ausgeschaltetem Leistungsschalter und
Fig. 3 bei eingeschaltetem Trennschalter und gesperrter Einführöffnung.

Die Figuren-Beschreibung wird an einem Trennschalterantrieb vorgenommen, wobei jedoch die Anmeldung allgemein auf die Merkmale des Hauptanspruchs abgestellt ist.

Der Trennschalterantrieb wird über eine hohle Betätigungswelle 10 geschaltet, wobei die Betätigungswelle 10 mit einer von der Bedienseite der Schaltanlage einsteckbaren und bis in Wirkverbindungslage einzuführenden Handkurbel gedreht wird. Die Trenner-Betätigung ist nur möglich, wenn die Handkurbel in die hohle Betätigungswelle tief bis in ihre Wirkverbindungslage eingesetzt werden kann. Der EIN- und der AUS-Stellung des Schalters entspricht je eine Winkellage der Betätigungswelle. Das Erreichen der Wirkverbindungslage in der Betätigungswelle wird durch eine Riegelklappe 5 unterbunden, die bei Stellung des Leistungsschalters in EIN- oder in AUS-Stellung in einen Einschnitt oder Schlitz 12 in die Betätigungswelle 10 eintaucht. Der Schlitz 12 verläuft senkrecht zur Wellenachse und etwa bis zur Mitte der Betätigungswelle.

Parallel zur Betätigungswelle 10 ist ein Festlager 14 vorhanden, auf dem gemeinsam die Riegelklappe 5 und eine Sperrklappe 7 drehbar angeordnet sind.

An jeder Klappe 5 und 7 ist im Abstand A vom Festlager 14 je eine Koppelstange 40, 42 angelenkt. Der Abstand A ist an beiden Klappen gleich groß; die Koppelstangen 40, 42 sind gleich lang. Die Gesamtlänge beider Koppelstangen ist etwas größer als das Doppelte des Abstands A. Mit den Längenabmessungen der Koppelstangen und ihren Anlenkpunkten an den Klappen sind die jeweiligen Drehwege der Klappen bestimmt.

Die freien Enden der Koppelstangen 40, 42 sind in einem Loslager 18 miteinander verbunden, so dass am Loslager 18 ein Angriffspunkt für das durch die Klappen und die Koppelstangen gebildete Hebelviergelenk vorhanden ist. Am Angriffspunkt 18 ist eine Koppelstange 30 zu einem Verriegelungsschieber 20 angelenkt. Die Bewegungsmöglichkeit des Verriegelungsschiebers korrespondiert mit der Stellung des Leistungsschalters. Der Verriegelungsschieber ist nur mit dem Hub H bewegbar, wenn sich der Leistungsschalter und die Betätigungswelle in AUS-Stellung befindet. Über eine geeignete, hier nicht näher dargestellte Mechanik im Leistungsschalter wird die Betätigung des Verriegelungsschiebers 20 bei EIN-Stellung des Leistungsschalters verhindert.

Um die Handkurbel in der Innenbohrung 11 der Betätigungswelle 10 (tief genug) bis in die Wirkverbindungslage voran schieben zu können, muss der Verriegelungsschieber 20 mittels Betätigungsstift 22 angehoben werden. Der Betätigungsstift 22 ist senkrecht auf dem Verriegelungsschieber angebracht, und am Schaltergehäuse (bzw. der Bedienseite der Schaltanlage) aus bewegbar. Der Verriegelungsschieber 20 ist senkrecht und waagerecht in einer Kulisse 24 geführt und so in seinem Weg begrenzt.

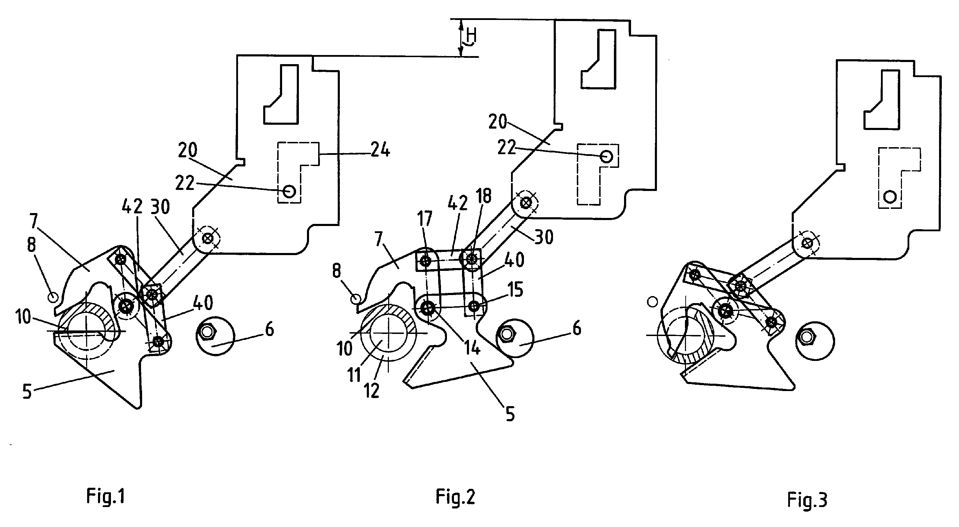

Wie beschrieben steht der Verriegelungsschieber 20 über das aus den Koppelstangen gebildete Hebelviergelenk mit den Klappen 5 und 7 in Verbindung. In der AUS-Stellung des Trennschalters bei gleichzeitiger AUS-Stellung des Leistungsschalters wird durch Bewegung des Verriegelungsschiebers mit Hub H die Riegelklappe 5 entgegen den Uhrzeigersinn aus dem Schlitz 12 herausgedreht, wodurch der Weg in der Betätigungswelle bis zur Wirkverbindungslage der Handkurbel freigegeben ist. Der Schwenkwinkel der Riegelklappe 5 wird durch den einstellbaren Exzenter 6 begrenzt. Die Bewegung der Sperrklappe 7 ist ihrerseits durch den Anschlag 8 begrenzt. Die Riegelklappe 5 kann aus der Bewegung des Hebelviergelenks nahezu den vollen Schwenk vollziehen kann (vergleiche Fig. 2).

Der Trennschalter wird durch Rechtsdrehen der Handkurbel um einen Winkel von mehr als 90 ° (etwa von 100 bis 120°) eingeschaltet. Mit der Drehung im Uhrzeigersinn dreht sich die Betätigungswelle 10 und der in diesem Bereich ausgebildete Schlitz 12.

Die Riegelklappe 5 taucht in dieser Stellung der Betätigungswelle 10 (Fig. 3) nicht in den Schlitz 12 ein, da der Schlitz 12 in der Betätigungswelle 10 für die Riegelklappe 5 geschlossen ist. Der Schlitz 12 ist für die Sperrklappe 7 zugänglich, wenn der Verriegelungsschieber senkrecht nach unten bewegt wird (Stellung "Leistungsschalter entriegelt"). Bei der Bewegung nach unten tritt die Sperrklappe 7 in den Schlitz 12 der Betätigungswelle 10 ein. Der Drehweg der Riegelklappe 5 ist eingeschränkt; die Riegelklappe 5 legt sich auf die Oberfläche der Betätigungswelle 10 an.

In Fig. 3 findet sich die Stellung der Betätigungswelle 10 bei ein- oder ausgeschaltetem Leistungsschalter und gesperrter Eintrittsöffnung, bzw. Durchtritt für die Handkurbel.

## Patentansprüche

1. Sperre für eine Dreh-Betätigungsvorrichtung eines Schalters, wobei EIN- und AUS-Stellungen des Schalters Winkellagen einer hohlzylindrischen Betätigungswelle (10) entsprechen, und eine Wirkverbindung mit der Betätigungsvorrichtung durch bis in Wirkverbindungslage in die Betätigungswelle (10) einführbare Handkurbel erreicht wird, und die Sperre das Erreichen der Wirkverbindungslage mittels eines manuell betätigbaren Verriegelungsschiebers (20) verhindert, und hierzu mindestens eine bewegbare Klappe (5, 7) zum Sperren der Wirkverbindungslage vorhanden ist, und der Verriegelungsschieber (20) mit der Winkellage der Betätigungswelle (10) korrespondiert, **dadurch gekennzeichnet, dass** die Betätigungswelle (10) über eine Hebelmechanik (30, 40, 42) mit mindestens einer der Klappen (5,7) derart verbunden ist, dass in jeder Winkellage der Betätigungswelle (10) das Erreichen der Wirkverbindungslage freigebbar oder sperrbar ist.

2. Betätigungssperre nach Anspruch 1, **dadurch gekennzeichnet, dass** in der Betätigungswelle (10) zwischen Einführöffnung (11) und Wirkverbindungslage ein Schlitz (12) senkrecht zur Wellenachse ausgebildet ist, und mindestens eine der Klappen (5, 7) in den Schlitz (12) eintaucht, wodurch das Erreichen der Wirkverbindungslage gesperrt ist.

3. Betätigungssperre nach Anspruch 1, **dadurch gekennzeichnet, dass** mindestens eine der Klappen (5, 7) vor der Stirnseite der Betätigungswelle (10) angeordnet ist.

4. Betätigungssperre nach einem der vorhergehenden Ansprüche, **dadurch gekennzeichnet, dass** zwei gegensinnig bewegbare Klappen (5, 7) zum Sperren vorhanden sind, und der Verriegelungsschieber (20) über eine Hebelmechanik (30,40, 42) mit beiden Klappen (5,7) verbunden ist.

5. Betätigungssperre nach einem der vorhergehenden Ansprüche, **dadurch gekennzeichnet, dass** die Hebelmechanik (30, 40, 42) eine Vierhebel-Mechanik ist.

6. Betätigungssperre nach einem der vorhergehenden Ansprüche, **dadurch gekennzeichnet, dass** die Betätigung des Verriegelungsschiebers (20) in einer der Winkellagen blockiert ist.

7. Betätigungssperre nach Anspruch 6, **dadurch gekennzeichnet, dass** die Einführsperre in der EIN-Stellung des Schalters wirksam ist.

8. Betätigungssperre nach einem der vorhergehenden Ansprüche, **dadurch gekennzeichnet, dass** der Verriegelungsschieber (20) über einen am Gehäuse des Schalters zugänglichen Betätigungsstift (22) verschiebbar ist.

9. Betätigungssperre nach einem der vorhergehenden Ansprüche, **dadurch gekennzeichnet, dass** die Sperre für eine Dreh-Betätigungsvorrichtung eines Trennschalters in einer mit einem Leistungsschalter schaltbaren Mittelspannungsschaltanlage angeordnet ist, wobei EIN- und AUS-Stellungen des Trennschalters Winkellagen der Betätigungswelle (10) entsprechen.
